# FASCICULE DE BREVET EUROPEEN

(11) **EP 1 520 316 B1**
(45) Date de publication et mention de la délivrance du brevet: **06.10.2010**
(21) Numéro de dépôt: 03760780.1
(22) Date de dépôt: 24.06.2003
(51) Int. Cl.: H01M 8/06, H01M 8/04

(54) **PROCEDE DE DEMARRAGE DE PILE A COMBUSTIBLE, SYSTEME DE PILE A COMBUSTIBLE, ET VEHICULE AINSI EQUIPE**
VERFAHREN ZUM ANFAHREN EINER BRENNSTOFFZELLE, BRENNSTOFFZELLENSYSTEM, UND KRAFTFAHRZEUG MIT EINER SOLCHEN VORRICHTUNG
FUEL CELL START-UP METHOD, FUEL CELL SYSTEM AND VEHICLE EQUIPPED WITH SAME

(30) Priorité: 24.06.2002 FR 0207800
(43) Date de publication de la demande: 06.04.2005
(73) Titulaire: RENAULT S.A.S., 92100 Boulogne Billancourt (FR)
(72) Inventeur: KERETLI, Fahri, F-78320 Le Mesnil St-Denis (FR); MARCHAND, Marielle, F-91400 SACLAY (FR)
(86) Numéro de dépôt international: PCT/FR2003/001935
(87) Numéro de publication internationale: WO 2004/001887

(56) Documents cités:
- WO-A-00/30200
- WO-A-02/055433
- DE-A- 10 010 068
- FR-A- 2 829 296
- PATENT ABSTRACTS OF JAPAN vol. 1995, no. 10, 30 novembre 1995 (1995-11-30) & JP 07 169490 A (TOSHIBA CORP), 4 juillet 1995 (1995-07-04)

## Description

La présente invention concerne le domaine des piles à combustible et des systèmes de traction comprenant une pile à combustible.

De façon classique, un système de pile à combustible avec reformage permet de générer une puissance électrique pour alimenter un moteur électrique, par exemple pour la traction d'un véhicule.

Le système comprend un réformeur, permettant de générer de l'hydrogène à partir d'un carburant, tel que de l'essence ou du méthanol stocké à bord du véhicule, une pile permettant de générer la puissance électrique à partir de l'hydrogène fourni par le réformeur et de l'oxygène de l'air, et des équipements auxiliaires, notamment un compresseur d'air, et un circuit de refroidissement.

La pile à combustible peut être constituée d'une pluralité de cellules connectées en série pour atteindre la tension de fonctionnement de la chaîne de traction du véhicule. Le dimensionnement des cellules est fait en fonction de la puissance nominale de la chaîne de traction que l'on doit atteindre.

Une cellule de pile à combustible comprend une plaque bipolaire et un assemblage électrodes-membrane. La cellule consomme de l'hydrogène pour former des protons et des électrons à l'anode. Les protons sont transférés à un électrolyte à travers la membrane et les électrons sont transférés par les plaques bipolaires vers le circuit électrique de sortie de la pile. A la cathode, l'oxygène de l'air se combine avec les protons et les électrons pour former de l'eau.

La plaque bipolaire doit assurer la distribution des réactifs de manière uniforme sur les électrodes, conduire les électrons, évacuer l'eau produite lors de la réaction électro-chimique vers l'extérieur, évacuer la chaleur produite lors des réactions exothermiques et assurer l'étanchéité au gaz. Elle peut être réalisée en graphite, en polymère conducteur, en métal, etc. La plaque bipolaire peut être du type « à canaux » ou du type « poreux ». La cathode et l'anode peuvent être fixées d'un côté et de l'autre de la membrane servant d'électrolyte. La membrane échangeuse de protons assure la circulation des protons de l'anode vers la cathode, et assure l'étanchéité aux gaz. Elle peut être réalisée en matériau perfluoré sulfoné, de type NAFION, ACIPLEX, etc.

Les électrodes, anode et cathode, assurent l'apport des réactifs aux lieux des réactions, réalisent les réactions électro-chimiques et évacuent les produits de la réaction vers les plaques bipolaires. Les électrodes peuvent être réalisées en un tissu de carbone, comprenant en outre un catalyseur pour les réactions, par exemple du platine, et des agents hydrophobes, comme le PTFE, pour évacuer l'eau. Les électrodes et la membrane sont intimement liées pour assurer le transfert d'un réactif d'un milieu à l'autre, par exemple par pressage à chaud des électrodes sur la membrane, ou encore par dépôt direct des électrodes sur la membrane.

L'énergie chimique contenue dans les gaz et non transformée en électricité se retrouve sous forme de chaleur. Actuellement, les matériaux connus pour la membrane doivent être maintenus à une température inférieure à 80°C. Il est donc nécessaire de prévoir un circuit de refroidissement. Une cellule de refroidissement peut être intercalée toutes les une à trois cellules. La cellule de refroidissement présente une forme semblable à celle d'une plaque bipolaire, mais sert à la circulation d'un fluide de refroidissement, comme de l'eau ou de l'eau additionnée d'un produit anti-gel.

Les conditions les plus sévères de fonctionnement pour une pile dans une application automobile, ont lieu lors d'une phase de démarrage où la pile doit pouvoir produire de l'électricité le plus rapidement possible. Les matériaux subissent de ce fait des contraintes sévères au niveau thermique, en raison du passage de la température ambiante à la température de fonctionnement en quelques minutes.

De plus, afin de monter la pile à combustible rapidement en température, les cellules doivent fonctionner à des tensions faibles pour générer une quantité de chaleur importante nécessaire à leur montée en température, ce qui nécessite l'utilisation de matériaux robustes.

De plus, dans le cas de l'approvisionnement en hydrogène par un réformeur, les catalyseurs anodiques à base d'alliage de platine utilisés dans la pile sont très sensibles au monoxyde de carbone qui est un sous-produit des réactions de réformage.

Lors des phases de démarrage, le réformeur doit être mis en température et durant cette phase il produit une quantité plus importante de monoxyde de carbone que lors des phases de fonctionnement ultérieures.

Pour ces raisons, les piles à combustible sont généralement surdimensionnées, par exemple avec une quantité supplémentaire de catalyseurs dans les électrodes, ce qui en accroît sensiblement le coût.

Par ailleurs, afin d'améliorer le refroidissement de la pile à combustible, on souhaite augmenter la température de fonctionnement. Les matériaux envisagés pour une pile à combustible à haute température, ont une gamme de fonctionnement restreinte. Par exemple, le polybenzymidazole (PBI) possède une bonne conductivité ionique, uniquement à partir de 120°C, ce qui conduit à une augmentation de la durée de démarrage de la pile. Il faut en effet porter l'ensemble de la pile à combustible à cette température pour qu'elle puisse commencer à fournir l'électricité.

Les dynamiques très rapides imposées dans une application automobile nécessitent également de surdimensionner les piles à combustible, afin qu'elles puissent répondre rapidement à de brusques variations de puissance.

Le document WO 00/30200 (Ballard Power Systems) décrit un système de pile à combustible pourvu d'un réformeur. Lors d'une phase de démarrage, le carburant qui est utilisé pour alimenter le réformeur est dirigé vers au moins une portion des cellules de la pile à combustible. Les cellules de cette portion fournissent une puissance de sortie par oxydation directe du carburant, au moins jusqu'à ce que le réformeur soit opérationnel. On risque ainsi de dégrader rapidement les cellules alimentées directement avec le carburant du réformeur tout en devant les construire de façon onéreuse.

L'invention se propose de résoudre ce problème.

L'invention propose un procédé de démarrage de pile à combustible rapide, économique et de faible nocivité pour la pile.

Le procédé de démarrage, selon la revendication 1, est destiné à une pile à combustible comprenant une pluralité de cellules alimentées par un réformeur. Le réformeur étant froid, on alimente en réformat un premier sous-ensemble des cellules de la pile à combustible. Puis, le réformeur étant chaud, on alimente le premier et le deuxième sous-ensembles des cellules de la pile à combustible, les cellules du premier sous-ensemble étant optimisées pour un fonctionnement avec un réformeur froid et les cellules du deuxième sous-ensemble étant optimisées pour un fonctionnement avec un réformeur chaud.

On entend par
- réformeur froid, un réformeur n'ayant pas atteint son régime de fonctionnement optimal, et par
- réformeur chaud, un réformeur ayant atteint son régime de fonctionnement optimal.

On peut ainsi réaliser les cellules du deuxième sous-ensemble de façon optimisée pour un rendement élevé et un coût faible, ces cellules pouvant exiger des réformats riches en hydrogène. Et, on optimise l'aptitude des cellules du premier sous-ensemble à fonctionner avec des réformats pauvres en hydrogène et susceptibles de contenir une notable proportion de monoxyde de carbone ou d'autres composés contenant, outre de l' hydrogène, de l'oxygène et/ou du carbone.

Un tel procédé permet de rendre rapidement opérationnelle une pile à combustible, levant ainsi un obstacle très important à la commercialisation de véhicules équipés de piles à combustible, obstacle constitué par la durée que doit attendre le conducteur entre son action sur un bouton de démarrage et le moment où le véhicule est réellement opérationnel, c'est-à-dire dispose de la puissance électrique suffisante pour pouvoir rouler dans des conditions convenables.

Dans un mode de réalisation de l'invention, les cellules du deuxième sous-ensemble sont alimentées lorsque lesdites cellules sont à une température de fonctionnement convenable. Si la température de fonctionnement n'est pas atteinte, les cellules du deuxième sous-ensemble ne sont pas alimentées. On peut ainsi réaliser les cellules du deuxième sous-ensemble avec des matériaux présentant des performances élevées, notamment de rendement, mais des exigences élevées en matière dé plage de température de fonctionnement.

Avantageusement, un circuit de refroidissement, commun aux premier et deuxième sous-ensembles de cellules de pile à combustible, est activé lorsque la température du premier sous-ensemble des cellules atteint un seuil de température.

Dans une première phase, lors d'un démarrage à froid, le circuit de refroidissement est désactivé de façon que les cellules du premier sous-ensemble montent rapidement en température.

Puis, dans une deuxième phase, le circuit de refroidissement est activé de façon que le fluide de refroidissement circule entre les premier et deuxième sous-ensembles de cellules, de façon que la chaleur dégagée par les cellules du premier sous-ensemble serve à mettre en température les cellules du deuxième sous-ensemble.

Enfin, dans une troisième phase, lorsque la température des cellules du deuxième sous-ensemble atteint un seuil de température, le fluide de refroidissement du circuit de refroidissement circule dans les cellules des premier et deuxième sous-ensembles et dans un radiateur, permettant d'évacuer la chaleur produite vers l'extérieur.

La présente invention propose également un système de pile à combustible selon la revendication 4 comprenant une pile à combustible pourvue d'une pluralité de cellules, et un réformeur apte à fournir de l'hydrogène à partir d'un carburant hydrocarboné.

Le système comprend un premier sous-ensemble de cellules optimisé pour un fonctionnement avec un réformeur froid et un deuxième sous-ensemble de cellules optimisé pour un fonctionnement avec un réformeur chaud, et des moyens pour alimenter le deuxième sous-ensemble de cellules en fonction de la température du réformeur.

L'invention propose encore un système de pile à combustible comprenant une pile à combustible pourvue d'une pluralité de cellules, et un réformeur apte à fournir de l'hydrogène à partir d'un carburant hydrocarboné.

Le système comprend un premier sous-ensemble de cellules optimisé pour un fonctionnement à froid et un deuxième sous-ensemble de cellules optimisé pour un fonctionnement à chaud, et des moyens pour alimenter le deuxième sous-ensemble de cellules en fonction de leur température. On peut ainsi utiliser, pour le deuxième sous-ensemble de cellules, des matériaux à température de fonctionnement élevée, ce qui permet un refroidissement efficace.

On entend par
- fonctionnement à froid, le fonctionnement de la pile de la température ambiante à la température minimale du deuxième sous-ensemble et avec un gaz anodique pouvant être issu d'un réformeur froid, et par
- fonctionnement à chaud, le fonctionnement de la pile dans sa gamme de température idéale avec un gaz anodique issu d'un réformeur chaud.

Avantageusement, le système comprend un circuit de refroidissement commun aux premier et deuxième sous-ensembles de cellules, de façon que la chaleur dégagée par le premier sous-ensemble de cellules chauffe le deuxième sous-ensemble de cellules lorsque ce dernier est à l'arrêt.

Dans un mode de réalisation de l'invention, le système comprend une vanne pilotée montée sur une conduite d'alimentation en réformat du deuxième sous-ensemble de cellules, une vanne pilotée montée sur une conduite d'alimentation en air du deuxième sous-ensemble de cellules, et un interrupteur électronique monté sur un conducteur de sortie du deuxième sous-ensemble de cellules.

On peut ainsi interrompre l'alimentation en réformat et en air du deuxième sous-ensemble de cellules, lorsque ces conditions de fonctionnement ne sont pas réunies. On peut également isoler électriquement ledit deuxième sous-ensemble de cellules.

Dans un mode de réalisation de l'invention, le système comprend une unité centrale pourvue de moyens pour exécuter un logiciel, d'une mémoire et d'au moins un logiciel stocké dans la mémoire. Le logiciel comprend un module pour activer un circuit de refroidissement lorsque la température du premier sous-ensemble de cellules atteint un seuil de température.

On comprend que la décomposition de la pile à combustible en deux sous-ensembles comprenant des matériaux différents permet de diminuer le coût de la pile, car les contraintes au démarrage ne sont appliquées que sur l'un des sous-ensembles. Seul ce sous-ensemble doit comporter les matériaux les plus résistants au fonctionnement à froid dudit sous-ensemble et du réformeur.

Un autre intérêt de l'invention réside dans l'amélioration du rendement énergétique de la pile à combustible, car les cellules du deuxième sous-ensemble ne génèrent une puissance électrique que lorsqu'elles ont atteint leur plage optimale de température et donc avec un rendement élevé.

Un véhicule équipé d'un moteur électrique de traction et d'une pile à combustible apte à alimenter le moteur, présente une autonomie élevée avec une pollution fortement réduite et un démarrage rapide.

La présente invention sera mieux comprise à l'étude de la description détaillée de quelques modes de réalisation pris à titre d'exemples nullement limitatifs et illustrés par les dessins annexés, sur lesquels :
- la figure 1 est une vue schématique d'une cellule à pile à combustible ; et
- la figure 2 est une vue schématique du système selon un aspect de l'invention.

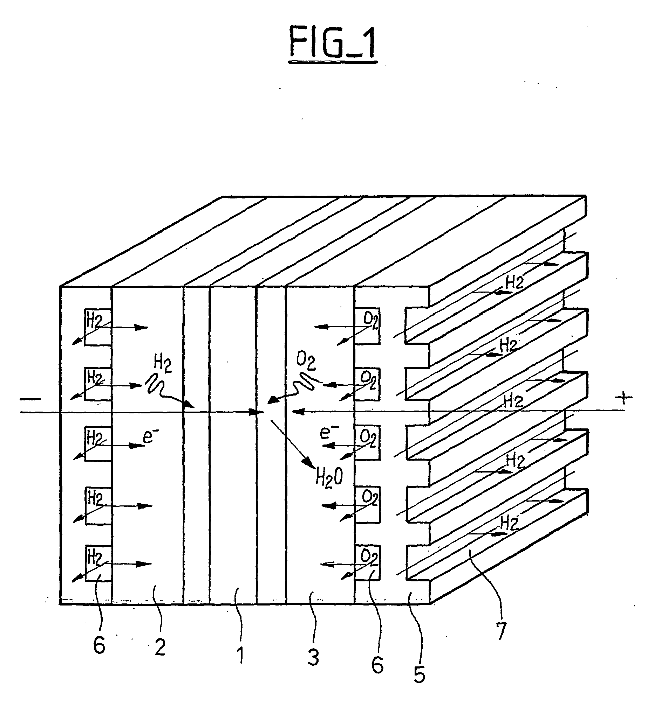

Comme on peut le voir sur la figure 1, une cellule de pile à combustible comprend une membrane 1 remplissant la fonction d'électrolyte, une anode 2 disposée d'un côté de la membrane 1 et une cathode 3 disposée du côté opposé, une plaque 4 du côté de l'anode 2 opposé à la membrane 1 et une plaque 5 disposée du côté de la cathode 3 opposé à la plaque 1. La plaque 4 est pourvue de canaux 6 formant des rainures ouvertes du côté de l'anode 2. Il en est de même de la plaque 5 qui comprend des canaux 6 ouverts du côté de la cathode 3 et des canaux 7 ouverts du côté opposé qui peut être mis en contact avec l'anode d'une autre cellule.

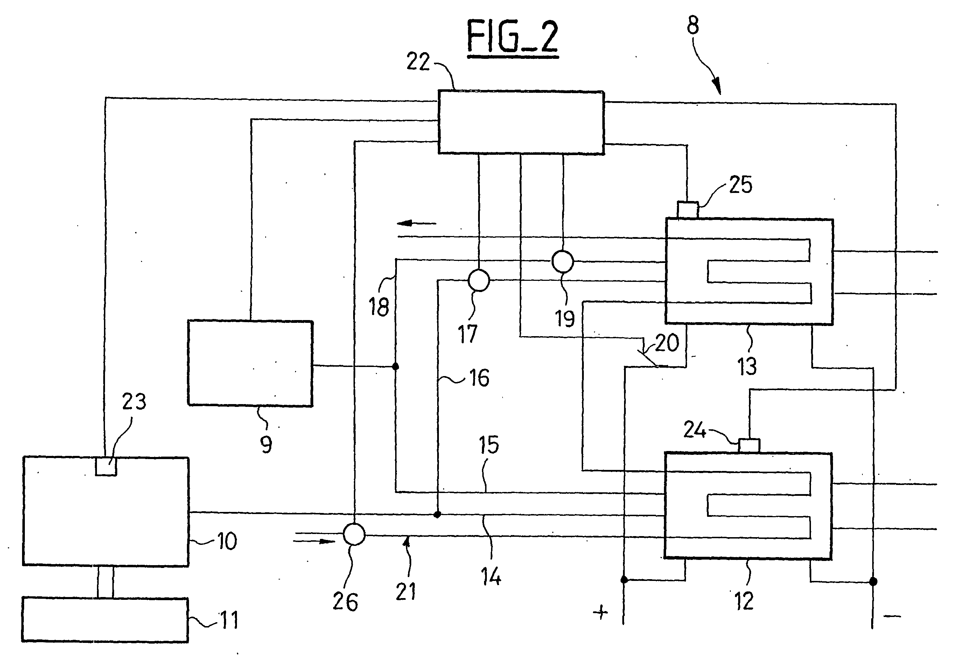

Sur la figure 2, est illustré un système conforme à un aspect de l'invention. Le système comprend une pile à combustible 8, un compresseur d'air 9 et un réformeur 10 alimenté en carburant par un réservoir 11. La pile à combustible 8 comprend deux sous-ensembles 12 et 13. Chaque sous-ensemble 12, 13 comprend une ou plusieurs cellules telles que décrites ci-dessus. Une conduite 14 est montée entre la sortie du réformeur 10 et l'entrée du sous-ensemble 12 pour alimenter ledit sous-ensemble 12 en réformat. On entend ici par « réformat », les composés chimiques produits par le réformeur, qui comprennent de l'hydrogène dont il est souhaitable que la proportion soit la plus élevée possible, du monoxyde de carbone dont il est souhaitable que la proportion soit la plus faible possible mais qui augmente généralement lorsque le réformeur n'a pas atteint sa température de fonctionnement idéale ou bien lors de phases transitoires, et éventuellement d'autres composés comprenant de l'hydrogène, de l'oxygène et/ou du carbone.

Une conduite 15 est montée entre la sortie du compresseur d'air 9 et le sous-ensemble 12. Une conduite 16 est montée en dérivation de la conduite 14 et débouche dans le sous-ensemble 13. Une vanne pilotée 17 est montée sur la conduite 16. De même, une conduite 18 équipée d'une vanne pilotée 19 est montée en dérivation de la conduite d'air 15 et débouche dans le sous-ensemble 13. Les sorties électriques des sous-ensembles 12 et 13 sont connectées en parallèle, un interrupteur électronique 20 étant toutefois monté sur l'une des sorties électriques du sous-ensemble 13 de façon qu'on puisse l'isoler électriquement.

Un circuit de refroidissement 21 est prévu, qui comprend une conduite qui passe par les sous-ensembles 12 et 13 pour assurer le refroidissement et une vanne pilotée 26, le fluide de refroidissement passant d'abord par le sous-ensemble 12 puis par le sous-ensemble 13. Le système comprend encore une unité centrale 22 apte à commander les autres éléments, notamment le compresseur 9, et les vannes pilotées 17, 19 et 26. L'interrupteur 20 est relié à un capteur de température 23 du réformeur 10, un capteur de température 24 du sous-ensemble 12 et un capteur de température 25 du sous-ensemble 13.

Le sous-ensemble 12 est optimisé pour supporter, d'une part, un fonctionnement à faible température et, d'autre part, une alimentation pauvre en hydrogène, c'est-à-dire avec des réformats riches en monoxyde de carbone provenant du réformeur 10, lui-même à basse température.

Les cellules du sous-ensemble 12 sont donc prévues avec une quantité de catalyseurs, par exemple du platine ou de l'alliage de platine, plus élevée que les cellules du sous-ensemble 13 et les catalyseurs adaptés à l'empoisonnement au monoxyde de carbone, une membrane dont la conductivité est suffisante à basse température pour fournir une puissance électrique suffisante dès le démarrage et enfin une membrane suffisamment épaisse.

Le sous-ensemble 13 fonctionnera lorsqu'il aura atteint sa température de fonctionnement et lorsque le réformeur délivrera un réformat avec un taux de monoxyde de carbone suffisamment faible.

Les cellules du sous-ensemble 13 peuvent donc être prévues avec une quantité de catalyseurs plus faible, les catalyseurs adaptés au taux de monoxyde de carbone des réformats fourni par le réformeur en fonctionnement continu, une membrane possédant une excellente conductivité ionique à sa température de fonctionnement en continu, et enfin une membrane de faible épaisseur.

A la mise en route d'un véhicule équipé d'un tel système, une procédure de mise en température du réformeur est activée, par exemple grâce à un brûleur de carburant intégré au réformeur. Habituellement, le réformeur ne commence à produire de l'hydrogène qu'une fois qu'il a atteint sa température de fonctionnement, typiquement 800°C.

Toutefois, la production d'hydrogène peut commencer à une température nettement plus faible, de l'ordre de 600 à 700°C, mais avec des réformats contenant un taux de monoxyde de carbone élevé, incompatible avec les cellules du sous-ensemble 13, mais compatible avec les cellules du sous-ensemble 12. Le réformat ainsi produit, riche en monoxyde de carbone, est envoyé aux cellules du sous-ensemble 12, la vanne 17 étant fermée. On notera également que la vanne 19 est fermée et que l'interrupteur 20 est ouvert. Ainsi, seul le sous-ensemble 12 est alimenté en hydrogène et en air et génère de l'énergie électrique. Les pertes thermiques dues à la génération électrique portent le sous-ensemble 12 de la température ambiante à sa plage de température optimale de fonctionnement.

Le circuit de refroidissement 21 est inactif, pompe 26 arrêtée, tant qu'une température inférieure à un premier seuil, par exemple 80°C, n'est pas atteinte par le sous-ensemble 12 dont la température est mesurée par le capteur 24. Dès que le capteur de température 24 mesure une température supérieure au premier seuil, l'unité centrale 22 commande la mise en fonctionnement de la pompe 26 qui fait circuler un fluide de refroidissement dans les sous-ensembles 12 et 13. Un transfert de chaleur se fait du sous-ensemble 12 vers le sous-ensemble 13 qui s'échauffe progressivement.

Lorsque le capteur de température 25 du sous-ensemble 13 détecte une température supérieure à un deuxième seuil, qui peut être un seuil supérieur au premier seuil utilisé pour le sous-ensemble 12, par exemple 120°C, et lorsque le capteur de température 23 du réformeur 10 détecte une température supérieure à un troisième seuil, par exemple 800°C, l'unité centrale 22 commande l'ouverture des vannes pilotées 17 et 19. La condition de température sur le réformeur 10 garantit un réformat dont la concentration en monoxyde de carbone est compatible avec le sous-ensemble 13 et la condition de température sur le sous-ensemble 13 garantit un bon rendement énergétique de ce dernier. L'interrupteur 20 est fermé. Le sous-ensemble 13 est alimenté en carburant et comburant et connecté au réseau électrique de puissance.

Si la consommation énergétique de la chaîne de traction, non représentée, est supérieure à la puissance électrique générée par le sous-ensemble 13 durant la phase de mise en température, un complément de puissance peut être fourni par une batterie, non représentée.

La constitution de la pile à combustible en deux sous-ensembles de caractéristiques différentes et comportant des matériaux différents, permet de diminuer le coût global de la pile car les exigences dues au démarrage ne sont appliquées que sur l'un des sous-ensembles, l'autre sous-ensemble pouvant être de construction moins robuste et incorporé de moins grande quantité de catalyseurs.

Bien entendu, la pile peut également être décomposée en un plus grand nombre de sous-ensembles, par exemple trois ou quatre, qui pourraient être mis en fonctionnement les uns après les autres selon la composition du réformat délivrée par le réformeur.

L'invention permet également une grande modularité dans la disposition des cellules de la pile à combustible, et permet surtout un démarrage rapide du véhicule équipé d'une telle pile à combustible, ce qui accroît fortement l'agrément d'utilisation d'un tel véhicule et peut faciliter sa commercialisation.

Enfin, l'invention permet une amélioration du rendement énergétique de la pile, car le deuxième sous-ensemble ne génère d'énergie électrique que lorsqu'il a atteint sa plage optimale de température dans laquelle il présente un rendement élevé.

## Revendications

1. Procédé de démarrage d'une pile à combustible, comprenant une pluralité de cellules alimentées par un réformeur (10) relié à un réservoir de carburant hydrocarboné, dans lequel, le réformeur étant froid, on alimente en réformat un premier sous-ensemble (12) de cellules de la pile a combustible, puis, lorsque le réformeur est chaud, on alimente en réformat le premier et le deuxième sous-ensembles de cellules de la pile à combustible, les cellules du premier sous-ensemble étant optimisées pour un fonctionnement du réformeur à l'état froid et les cellules du deuxième sous-ensemble (13) étant-optimisées pour un fonctionnement du réformeur en régime de fonctionnement optimal.

2. Procédé selon la revendication 1, dans lequel les cellules du deuxième sous-ensemble sont alimentées lorsque lesdites cellules sont à une température de fonctionnement convenable.

3. Procédé selon la revendication 1 ou 2, dans lequel un circuit de refroidissement (21), commun aux premier et deuxième sous-ensembles de cellules de pile à combustible, est activé lorsque la température du premier sous-ensemble des cellules atteint un seuil de température.

4. Système de pile à combustible, comprenant une pile à combustible (8), pourvu d'une pluralité de cellules, un réservoir de carburant hydrocarboné et un réformeur (10) relié au réservoir apte à fournir de l'hydrogène à partir dudit carburant hydrocarboné, **caractérisé par le fait que** la pile à combustible est alimentée en réformat provenant du réformeur et comprend un premier sous-ensemble (12) de cellules optimisées pour un fonctionnement du réformeur à froid et un deuxième sous-ensemble (13) de cellules optimisées pour un fonctionnement avec du réformeur en régime de fonctionnement optimal, et des moyens pour alimenter le deuxième sous-ensemble de cellules en fonction de la température du réformeur.

5. Système selon la revendication 4, **caractérisé par le fait qu'**il comprend des moyens pour alimenter le deuxième sous-ensemble de cellules en fonction de la température dudit deuxième sous-ensemble.

6. Système selon la revendication 4 ou 5, **caractérisé par le fait qu'**il comprend un circuit de refroidissement (21) commun aux premier et deuxième sous-ensembles de cellules, de façon que la chaleur dégagée par le premier sous-ensemble (12) de cellules chauffe le deuxième sous-ensemble (13) de cellules, lorsque ce dernier est à l'arrêt.

7. Système selon l'une quelconque des revendications 4 à 6, **caractérisé par le fait qu'**il comprend une vanne pilotée (17) montée sur une conduite d'alimentation en réformats du deuxième sous-ensemble de cellules, une vanne pilotée (19) montée sur une conduite d'alimentation en air du deuxième sous-ensemble de cellules, et un interrupteur électronique (20) monté sur un conducteur de sortie du deuxième sous-ensemble de cellules.

8. Système selon l'une quelconque des revendications 4 à 7, **caractérisé par le fait qu'**il comprend une unité centrale (22) comprenant des moyens pour exécuter un logiciel, une mémoire et au moins un logiciel stocké dans la mémoire, le logiciel comprenant un module pour activer un circuit de refroidissement (21) lorsque la température du premier sous-ensemble de cellules atteint un seuil de température.

9. Véhicule comprenant une chaîne de traction à moteur électrique et un système de pile à combustible, selon l'une quelconque des revendications 4 à 8.

## Claims

1. Method of starting up a fuel cell unit, comprising a plurality of cells supplied by a reformer (10) connected to a hydrocarbon fuel reservoir, in which, when the reformer is cold, a first subassembly (12) of cells of the fuel cell unit is supplied with reformate and then, when the reformer is hot, the first and second subassemblies of cells of the fuel cell unit are supplied with reformate, the cells of the first subassembly being optimized for operation of the reformer in the cold state and the cells of the second subassembly (13) being optimized for operation of the reformer under optimum operating conditions.

2. Method according to Claim 1, in which the cells of the second subassembly are supplied when said cells are at a suitable operating temperature.

3. Method according to Claim 1 or 2, in which a cooling circuit (21), common to the first and second subassemblies of cells of the fuel cell unit, is activated when the temperature of the first subassembly of cells reaches a temperature threshold.

4. Fuel cell system, comprising a fuel cell unit (8) provided with a plurality of cells, a hydrocarbon fuel reservoir and a reformer (10) connected to the reservoir, capable of delivering hydrogen from said hydrocarbon fuel, **characterized in that** the fuel cell unit is supplied with reformate coming from the reformer and comprises a first subassembly (12) of cells that are optimized for operation of the reformer when cold and a second subassembly (13) of cells that are optimized for operation with the reformer under optimum operating conditions, and means for supplying the second subassembly of cells depending on the temperature of the reformer.

5. System according to Claim 4, **characterized in that** it comprises means for supplying the second subassembly of cells according to the temperature of said second subassembly.

6. System according to Claim 4 or 5, **characterized in that** it comprises a cooling circuit (21) common to the first and second subassemblies of cells, so that the heat released by the first subassembly (12) of cells heats the second subassembly (13) of cells, when said second subassembly is shut down.

7. System according to any one of Claims 4 to 6, **characterized in that** it comprises a controlled valve (17) mounted on a pipe for supplying the second subassembly of cells with reformate, a controlled valve (19) mounted on a pipe for supplying the second subassembly of cells with air and an electronic switch (20) mounted on an output conductor of the second subassembly of cells.

8. System according to any one of Claims 4 to 7, **characterized in that** it comprises a central processing unit (22) comprising software execution means, a memory and at least one software program stored in the memory, the software including a module for activating a cooling circuit (21) when the temperature of the first subassembly of cells reaches a temperature threshold.

9. Vehicle comprising an electric motor traction system and a fuel cell system according to any one of Claims 4 to 8.

## Patentansprüche

1. Verfahren zum Starten einer Brennstoffzelle, die mehrere Zellen enthält, die durch einen Reformer (10) versorgt werden, der mit einem Vorratsbehälter für kohlenwasserstoffhaltigen Brennstoff verbunden ist, in dem dann, wenn der Reformer kalt ist, eine erste Unteranordnung (12) von Zellen der Brennstoffzelle mit Reformat versorgt wird, und dann, wenn der Reformer heiß ist, die erste und die zweite Unteranordnung von Zellen der Brennstoffzelle mit Reformat versorgt werden, wobei die Zellen der ersten Unteranordnung für einen Betrieb des Reformers im kalten Zustand optimiert sind und die Zellen der zweiten Unteranordnung (13) für einen Betrieb des Reformers im optimalen Betriebsbereich optimiert sind.

2. Verfahren nach Anspruch 1, wobei die Zellen der zweiten Unteranordnung versorgt werden, wenn die Zellen eine geeignete Betriebstemperatur haben.

3. Verfahren nach Anspruch 1 oder 2, wobei ein Kühlkreis (21), der der ersten und der zweiten Unteranordnung von Zellen der Brennstoffzelle gemeinsam ist, aktiviert wird, wenn die Temperatur der ersten Unteranordnung von Zellen einen Temperaturschwellenwert erreicht.

4. Brennstoffzellensystem, mit einer Brennstoffzelle (8), die mit mehreren Zellen versehen ist, einem Vorratsbehälter für kohlenwasserstoffhaltigen Brennstoff und einem Reformer (10), der mit dem Vorratsbehälter verbunden ist und Wasserstoff ausgehend von dem kohlenwasserstoffhaltigen Brennstoff liefern kann, **dadurch gekennzeichnet, dass** die Brennstoffzelle mit Reformat, das von dem Reformer stammt, versorgt wird und eine erste Unteranordnung von Zellen (12), die für einen kalten Betrieb des Reformers optimiert sind, eine zweite Unteranordnung (13) von Zellen, die für einen Betrieb, in dem der Reformer im optimalen Betriebsbereich ist, optimiert sind, und Mittel zum Versorgen der zweiten Unteranordnung von Zellen in Abhängigkeit von der Temperatur des Reformers enthält.

5. System nach Anspruch 4, **dadurch gekennzeichnet, dass** es Mittel enthält, um die zweite Unteranordnung von Zellen in Abhängigkeit von der Temperatur dieser zweiten Unteranordnung zu versorgen.

6. System nach Anspruch 4 oder 5, **dadurch gekennzeichnet, dass** es einen Kühlkreis (21) enthält, der der ersten und der zweiten Unteranordnung von Zellen gemeinsam ist, derart, dass die von der ersten Unteranordnung (12) von Zellen freigesetzte Wärme die zweite Unteranordnung (13) von Zellen erwärmt, wenn diese angehalten ist.

7. System nach einem der Ansprüche 4 bis 6, **dadurch gekennzeichnet, dass** es ein gesteuertes Ventil (17), das in einer Leitung für die Versorgung mit Reformaten der zweiten Unteranordnung von Zellen angebracht ist, ein gesteuertes Ventil (19), das in einer Leitung für die Versorgung mit Luft der zweiten Unteranordnung von Zellen angebracht ist, und einen elektronischen Unterbrecher (20), der in einem Ausgangsleiter der zweiten Unteranordnung von Zellen angebracht ist, enthält.

8. System nach einem der Ansprüche 4 bis 7, **dadurch gekennzeichnet, dass** es eine Zentraleinheit (22), die Mittel zum Ausführen von Software enthält, einen Speicher und wenigstens eine in dem Speicher gespeicherte Software enthält, wobei die Software ein Modul enthält, um einen Kühlkreis (21) zu aktivieren, wenn die Temperatur der ersten Unteranordnung von Zellen einen Temperaturschwellenwert erreicht.

9. Fahrzeug, das einen Antriebsstrang mit Elektromotor und ein Brennstoffzellensystem nach einem der Ansprüche 4 bis 8 enthält.
